# EUROPÄISCHE PATENTSCHRIFT

(11) **EP 3 356 113 B1**
(45) Veröffentlichungstag und Bekanntmachung des Hinweises auf die Patenterteilung: **17.02.2021**
(21) Anmeldenummer: 16721635.7
(22) Anmeldetag: 27.04.2016
(51) Int. Cl.: B29C 48/44, B29C 48/25, B29C 48/505

(54) **PLANETWALZENEXTRUDER MIT ZENTRALER SCHRAUBKUPPLUNG**
PLANETARY ROLLER EXTRUDER HAVING A CENTRAL SCREW COUPLING
EXTRUDEUSE PLANÉTAIRE À ACCOUPLEMENT PAR VISSAGE CENTRAL

(30) Priorität: 27.09.2015 DE 102015012435
(43) Veröffentlichungstag der Anmeldung: 08.08.2018
(73) Patentinhaber: Entex Rust & Mitschke GmbH, 44805 Bochum (DE)
(72) Erfinder: RUST, Harald, 44805 Bochum (DE)
(74) Vertreter: Kaewert, Klaus
(86) Internationale Anmeldenummer: PCT/EP2016/000666
(87) Internationale Veröffentlichungsnummer: WO 2017/050400

(56) Entgegenhaltungen:
- DE-C1- 3 815 061
- DE-C1- 3 815 061
- DE-U1- 9 421 955
- DE-U1-202010 017 571
- DE-U1-202010 017 571

## Beschreibung

Ein besonderer Anwendungsbereich für Extruder ist die Verarbeitung und Bearbeitung von Kunststoffen. Es kann sich um Kunststoffe handeln z.B. für Formteile, Werkstücke, Blöcke, Tafeln, Folien, Bahnen, Beläge, Rohre, Schläuche,
Stäbe, Stangen , Profile, Bänder, Schnüre, Drähte, Borsten, Netze
Klebstoffe, Lacke, Leime, Kleister, Kitte, Bindemittel
Farben, Putze, Spachtel, Verguß- und Versiegelungsmassen, Schmelz-und
Beschichtungsstoffe, Gele,
Fäden, Fasern, Garne, Seiden, Stränge, Matten, Vliese, Gewebe

Die Kunststoffe können aus Monomeren und/oder aus Polymeren bestehen. Häufig handelt es sich um ein Gemisch, wobei auch Mischungen mit anderen Stoffen als Kunststoffen vorkommen. Das gilt besonders für die Herstellung von Kunststoffschaum.

Darüber hinaus können in den Extruder auch andere plastifizierbare bzw. schon plastische Stoffe eingesetzt werden. Dazu gehören z.B. Lebensmittel und Pharmazeutika, auch Chemikalien.

Mit einem Extruder lassen sich die eingesetzten Stoffe sehr vorteilhaft aufschmelzen, mischen bzw. homogenisieren und dispergieren. Außerdem kann das Einsatzgut zugleich erwärmt oder gekühlt werden. Zur Erwärmung bzw. Kühlung finden sich Kühlleitungen bzw. Heizleitungen in dem Extrudermantel und ggfs. auch in Spindeln. Zusätzlich bewirkt die von den Extruderspindeln auf das Einsatzgut ausgeübte Verformung eine erhebliche Erwärmung. Außerdem ist in der Regel die Erzeugung eines erheblichen Druckes erforderlich. Z.B. ist für die Herstellung von Kunststoffschaum sehr wichtig, daß im Extruder ein erheblicher Druck aufgebaut werden kann, der ein Aufschäumen im Extruder verhindert. Andere Gründe für den Druckaufbau können im Material und/oder im Verfahren liegen.

Für die Extruder sind verschiedene Bauarten bekannt.
Es gibt Einschneckenextruder, Doppelschneckenextruder und Planetwalzenextruder.
Einschneckenextruder sind Extruder, bei denen eine einzige Schnecke in einem Gehäuse umläuft. Doppelschneckenextruder sind Extruder, bei denen zwei Schnecken ein einem Gehäuse umlaufen, die parallel zueinander angeordnet sind und miteinander kämmen.

Die verschiedenen Bauarten kommen auch in Kombination vor. Z.B. kann der Primärextruder einer Tandemanlage durch einen Einschneckenextruder oder Doppelschneckenextruder gebildet werden, während der Sekundärextruder ein Planetwalzenextruder ist. Der Primärextruder und der Sekundärextruder können mit unterschiedlicher Drehzahl betrieben werden. Das hat erhebliche Vorteile. Die Kombination unterschiedlicher Extrudersysteme kann auch in einem einzigen Extruder erfolgen. Dabei bilden die miteinander kombinierten Extrudersysteme in dem einen Extruder verschiedene Extruderabschnitte. Diese Abschnitte können mit den Verfahrensabschnitten des Extruders übereinstimmen, müssen es aber nicht. Die Verfahrensabschnitte sind bei der Aufarbeitung von Kunststoffen z.B. Einziehen des Kunststoffes, Aufschmelzen, Homogenisieren/Dispergieren und Kühlen der Schmelze auf Extrusionstemperatur wichtig.
Bei der Kombination verschiedener Extrudersysteme in einem Extruder wird üblicherweise eine gemeinsame Spindel verwendet. Z.B. setzt sich die Schnecke aus einem als Einschneckenextruder/Abschnitten ausgebildeten Bereich "Aufarbeitung des Kunststoffes" in den als Planetwalzenextruder/Abschnitt ausgebildeten Bereich "Kühlung der Schmelze auf Extrusionstemperatur" fort. Ein häufig vorkommendes anderes Beispiel ist die die Kombination eines nach Art einer Einschnecke ausgebildeten Füllteiles mit einem Planetwalzenextruderabschnitt. In der Kombination bildet die Schnecke des Füllteiles im Planetwalzenextruder/Abschnitt die Zentralspindel bzw. die Zentralspindel des Planetwalzenextruderabschnittes im Füllteil die Schnecke. Die Verwendung einer gemeinsamen Schnecke/Zentralspindel für unterschiedliche Extruderabschnitte ist für zeitgemäße Extruder relativ einfach, weil diese Schnecken aus Hülsen zusammengesetzt werden, die von einer gemeinsamen Stange durchdrungen werden und miteinander verspannt werden. Auch bei Planetwalzenextrudern ist bekannt, daß die Zentralspindeln aus einer Hülse und einer Stange bestehen, mit der die Hülse am Antrieb verspannt wird. Diese Bauweise hat auch andere Vorteile. Insbesondere kann diese Bauweise zu einer Auswechselung einzelner Hülsen oder Gruppen von Hülsen genutzt werden. Der Auswechselungsbedarf kann genutzt werden, wenn zum Beispiel eine Hülse oder verschiedene Hülsen beschädigt oder verschlissen sind oder wenn ein Extruderabschnitt geändert wird und eine Anpassung an die Änderung erforderlich ist.

Üblicherweise ist die Zentralspindel eines Planetwalzenextruders bzw. eines antriebsseitig angeordneten Planetwalzenextruderabschnitts/Planetwalzenmoduls antriebsseitig in einem Getriebezapfen gehalten. Der Getriebezapfen ist mit dem Antrieb verbunden, sondern auch ein Lager für die Schnecken/Zentralspindeln. Dabei greift die Zentralspindel mit einem Teil, der wie eine Vielkeilwelle ausgebildet ist, in eine entsprechende Öffnung des Getriebezapfens. Die Öffnung des Getriebezapfens besitzt für jeden Keil an dem Ende der Zentralspindel eine passende Ausnehmung.

Außerdem ist aus der DE3815061C1 ein Extruder bekannt, der mindestens teilweise als Planetwalzenextruder ausgebildet ist, wobei der als Planetwalzenextruder ausgebildete Teil eine angetriebene, außen verzahnte Zentralspindel besitzt, wobei die Zentralspindel im Abstand von einem innen verzahnten Gehäuse umgeben ist und in dem Hohlraum zwischen Zentralspindel und dem Gehäuse außen verzahnte Planetspindeln umlaufen, deren Verzahnung sowohl mit der Innenverzahnung des Gehäuses als auch mit der Außenverzahnung der Zentralspindel kämmt, wobei zu dem Extruder ein als Einschnecke ausgebildetes Füllteil gehört, wobei die Zentralspindel mit ihrem getriebeseitigen Ende in der Schnecke des Füllteiles verschraubt ist, wobei die Schnecke zentralspindelseitig mit einer innen verzahnten Bohrung versehen ist, deren Verzahnung zu der Außenverzahnung der Zentralspindel passt.

Die Extruderabschnitte bilden sich häufig auch in dem Extrudergehäuse ab. Dabei werden die Gehäuseabschnitte an den Enden mit Flanschen aneinander verspannt.

Im folgenden wird nur von Extrudern gesprochen, das schließt sowohl die Kombination mit gleichen oder anderen Extrudern als auch die abschnittsweise Kombination unterschiedlicher Extrudersysteme in einem Extruder ein.

Desgleichen ist die Kombination von Extruderabschnitten gleicher Systeme eingeschlossen.

Die Erfindung befaßt sich vorzugsweise mit Planetwalzenextrudern. Diese Extruder unterscheiden sich ganz wesentlich von anderen Extrudern: Um eine Zentralspindel laufen eine Anzahl Planetspindeln herum. Die Planetspindeln besitzen wie die Zentralspindel eine Verzahnung, üblicherweise eine Schrägverzahnung, noch weiter bevorzugt in Form eine Evolventenverzahnung.

Ferner ist das Extrudergehäuse innen verzahnt, vorzugsweise mit einer verzahnten Buchse versehen.

Die Planetspindeln kämmen zugleich mit der Zentralspindel und dem Extrudergehäuse bzw. der Buchse.

Die Planetspindeln würden sich unter dem Flankendruck der Verzahnung in axialer Richtung aus dem Planetwalzenextruder herausbewegen, wenn der axiale Druck nicht durch ein Widerlager, den Anlaufring, aufgefangen würde. Zeitgemäße Extruder besitzen den Anlaufring am Gehäuseende, so daß der Anlaufring positioniert wird, wenn das zugehörige Gehäuse mit seinem oben beschriebenen Flansch verschraubt/verspannt wird.

Der Anlaufring umschließt die Zentralspindel mit mehr oder weniger Abstand. Das im Planetwalzenextruder aufgearbeitete bzw. behandelte Einsatzgut wird durch den Spalt zwischen Anlaufring und Zentralspindel gedrückt. Diese Betriebsweise hat sich bisher bewährt.

Die DE2521774A1 zeigt Extrusionsanlagen mit solchen Planetwalzenextruderabschnitten. Jeder Planetwalzenextruderabschnitt besitzt eine Zentralspindel, ein Gehäuse und Planetspindeln, die auf der Zentralspindel und in dem innen verzahnten Gehäuse umlaufen. Zugleich werden die Planetspindeln durch Anlaufringe daran gehindert, in axialer Richtung aus dem Gehäuse zu wandern. Dabei gleiten die Planetspindeln an den Anlaufringen. Die Anlaufringe sind zwischen den Enden der Gehäuse der verschiedenen Planetwalzenextruderabschnitte gehalten.
Zwischen den Anlaufringen und der Zentralspindel besteht ein Spalt, durch den die Schmelze von einem Extruderabschnitt in den nächsten übertritt. Für alle Planetwalzenextruderabschnitte ist eine gemeinsame Zentralspindel vorgesehen. Der Spaltbildung zwischen dem Anlaufring und der Zentralspindel ist förderlich, wenn in dem Spalt keine Verzahnung an der Zentralspindel vorgesehen ist.

Die DE3815061 zeigt einen Extruder, der mindestens teilweise als Planetwalzenextruder ausgebildet ist, wobei der als Planetwalzenextruder ausgebildete Teil eine angetriebene, außen verzahnte Zentralspindel besitzt, wobei die Zentralspindel im Abstand von einem innen verzahnten Gehäuse umgeben ist und in dem Hohlraum zwischen Zentralspindel unmd Gehäuse außen verzahnte Planetspindeln umlaufen, deren Verzahnung sowohl mit der Innenverzahnung des Gehäuses als auch mit der Außenverzahnung der Zentralspindel kämmt, wobei die Zentralspindel mit einem Zapfen des Antriebes gekoppelt ist.

Die DE202010017571 geht auch von einem Extruder aus, der aus einem als Einschneckenextruder ausgebildeten Füllteil und einem Planetwalzenextruderabschnitt besteht. Dabei ist die Zentralspindel des Planetwalzenextruderabschnitts mit der Schnecke des Füllsteils durch einen Anker verspannt, der in der Schnecke verschraubt ist.

Die DE4433487C2 zeigt einen Planetwalzenextruder, der wie die Extrusionsanlage nach der DE 2521774A1 verschiedene Planetwalzenextruderabschnitte besitzt. Durch alle Abschnitte erstreckt sich eine gemeinsame Zentralspindel.

Die Planetwalzenextruder sind aufwendiger als andere Extruderbauarten und deshalb auch teurer.

Die Erfindung hat sich die Aufgabe gestellt, die Planetwalzenextruder wirtschaftlicher herstellen und betreiben zu können.

Das wird mit den Merkmalen des Hauptanspruches erreicht.
Die Unteransprüche beschreiben bevorzugte Ausführungsbeispiele der Erfindung.
Dabei wendet sich die Erfindung der Schnecke bzw. Zentralspindel zu, welche alle Abschnitte des Extruders durchdringt.
Nach der Erfindung wird eine neue Wirtschaftlichkeit dadurch erreicht, daß die Schnecken/Zentralspindel über der ganzen Länge einheitlich verzahnt werden. Infolgedessen können die Zentralspindeln von einem Ausgangsmaterial abgelängt werden, das bereits mit der passenden Verzahnung versehen ist. Das vereinfacht die Herstellung erheblich.
Allerdings sind solche Schnecken/Zentralspindeln nicht in herkömmlicher Weise mit dem Antriebszapfen zu koppeln. Der herkömmliche Weg ist eine Vielkeilverbindung. Bei der Vielkeilverbindung wird ein Verbindungsteil vom anderen Verbindungsteil umfaßt und ist das innen liegende Verbindungsteil am Außenmantel mit einer Vielzahl von in Längsrichtung verlaufenden Nuten versehen. Das außen liegende Verbindungsteil besitzt korrespondierende Nuten am Innenmantel. In die Nuten werden Keile eingesetzt, die auf Scherung beansprucht werden. Üblicherweise werden die Keile in die Nuten des innen liegenden Verbindungsteiles eingesetzt und mit dem innen liegenden Verbindugnsteil in das außen liegende Verbindungsteil geschoben.
Bei der Vielkeilverbindung bestimmt in der Regel der Scherwiderstand der Keile das mit der Vielkeilverbindung übertragbare Drehmoment.

Die Erfindung geht hinsichtlich der Kopplung einen völlig neuen Weg, indem nach der Erfindung eine Verschraubung zwischen den Spindeln/Zentralspindeln und der Antriebszapfen vorgesehen ist.
Dabei ist vorzugsweise vorgesehen, daß der Antriebszapfen die Schnecke/Zentralspindel außen umgibt. Diese Überlegung geht davon aus, daß die Schnecke/Zentralspindel im Kopplungsbereich am Außenmantel ein Schraubengewinde tragen kann. Dabei wird nach der Erfindung als Schraubengewinde eine Ausbildung angesehen, zu der eine kompatible Schraubenmutter bzw. ein kompatibles Innengewinde in einem Antriebszapfen herstellbar ist, so daß ein Einschrauben der Schnecke bzw. Zentralspindel in den Antriebszapfen möglich ist. Eine wesentliche Eigenschaft des Schraubengewindes ist eine gleichmäßig Steigung der Gewindegänge in dem Kopplungsbereich/V erschraubungsbereich.

Vorzugsweise ist eine Normalverzahnung bzw. Standardverzahnung in dem Kopplungsbereich/Verschraubungsbereich vorgesehen. Im Unterschied zu der Normalverzahnung bzw. Standardverzahnung sehen Sonderverzahnungen wie Igelverzahnungen Ausnehmungen an den Zähnen vor.
Das Innengewinde in dem Antriebszapfen kann in herkömmlicher Weise erstellt werden. Allerdings ist das mit einigem Aufwand verbunden, wenn es für die Verzahnung keine Standard-Schneidwerkzeuge gibt.
Vorzugsweise wird das Innengewinde in einem Antriebszapfen durch Erodieren (Funken-Erosion) hergestellt.

In bekannten Veröffentlichungen zum Erodieren wird zur Innenverzahnung eines Planetwalzenextrudergehäuses/Buchse ein Verfahren beschrieben, bei dem eine Elektrode dem Querschnitt den Planetenspindeln unter Berücksichtigung eines zum Erodieren notwendigen Abstandes zur Innenfläche der Buchse nachgebildet ist. Diese Elektrode wird in dem Gehäuse unter gleichzeitiger Drehung auf und ab bewegt. Die Drehung entspricht der Gewindesteigung der Evolventenverzahnung im Gehäuse. Dabei steht das Gehäuse in einem mit Dielektrikum gefüllten Bad und liegen an dem Gehäuse und an der Elektrode solch unterschiedlichen Spannungen an, daß Funken aus dem Gehäuse zu der Elektrode springen. Zusammen mit den Funken wird aus der Innenfläche des Gehäuses Material abgetragen. Der Materialabtrag ist von verschiedenen Faktoren abhängig. Die Spannung und der Abstand zwischen dem Gehäuse und der Elektrode sind wichtige Faktoren. Der Materialabtrag mittels Funkeneerodieren erfolgt solange, bis an der Innenfläche die gewünschte Verzahnung entstanden ist.
Die entstehende Wärme wird durch Umwälzung des Dielektrikums und durch dessen Kühlung ausgetragen.
Die Elektrode besteht vorzugsweise aus Graphit. Aber auch andere Materialien wie Kupfer, Messing, Wolfram, Hartmetall kommen für die Elektrode in Betracht

Dieser Vorgang soll nach einem älteren Vorschlag rationalisiert werden. Dazu sind die Elektroden an dem beim Einfahren der Elektrode in die Gehäusebuchse bzw. an dem beim Einfahren der Elektrode in das Gehäuse vorderen Ende(Elektrodenkopf) mit einer Schrägung und/oder Rundung versehen. Vorzugsweise ist eine Kombination von Rundung und Schrägung vorgesehen. Dabei werden Rundung und Schrägung vorzugsweise der Baugröße des Extruders und dem Verzahnungsmodul angepaßt.

Zur Kennzeichnung der Baugröße wird der Teilkreisdurchmesser der Innenverzahnung des Extrudergehäuses im vorliegenden Fall herangezogen. Die Baugröße 50 bezeichnet ein Extrudergehäuse, deren Innenverzahnung einen Teilkreisdurchmesser von 50mm aufweist; zur Baugröße 150 gehört ein Teilkreisdurchmesser von 150mm; zur Baugröße 350 gehört ein Teilkreisdurchmesser von 350mm; zur Baugröße 500 gehört ein Teilkreisdurchmesser von 500mm usw.
In Abhängigkeit von der Baugröße ergeben sich folgende bevorzugte Radien für Rundungen:

| Baugröße | WZ | Rundungsradius | |
|---|---|---|---|
| minimal | maximal | minimal | maximal |
| 50 | 150 | 2mm | 6mm |
| 150 | 300 | 5mm | 8mm |
| 350 | 400 | 5mm | 10mm |
| 500 | 1000 | 5mm | 20mm |

Die Rundung und/oder Schrägung zeigt schon Wirkung, wenn sie oberhalb des Zahnfußes (zwischen Zahnkopf und Zahnfuß) der Verzahnung beginnt oder am Zahnfuß beginnt. Vorzugsweise beginnt die Rundung sogar unterhalb des Zahnfußes. Das heißt, der kleinste Elektrodendurchmesser an der Rundung ist kleiner als der Durchmesser der Elektrode am Zahnfuß der Verzahnung. Entsprechendes gilt, wenn nur eine Schrägung an dem Elektrodenkopf vorgesehen ist. Entsprechendes gilt auch für eine Kombination aus Schrägung und Rundung am Elektrodenkopf.

Je weiter sich die Rundung und/oder Schrägung am Elektrodenmantel erstreckt, desto schneller läßt sich eine vorteilhafte Erodierleistung erreichen. Vorzugsweise erstreckt sich die Rundung und/oder Schrägung für kleine Baugrößen mindestens 8mm und für große Baugrößen mindestens 30mm - beginnend von der Stirnfläche des Elektrodenkopfes - am Elektrodenmantel entlang.
Je weiter sich die Rundung und/oder Schrägung am Elektrodenmantel erstreckt, desto weiter muß die Elektrode durch das zu bearbeitende Elektrodengehäuse bzw. durch die zu bearbeitende Buchse hindurchgefahren werden, um eine gleichmäßige Verzahnung zu bewirken.
Vorzugsweise erstreckt sich die Rundung und/oder Schrägung für kleine Baugrößen höchstens 15mm und für große Baugrößen höchstens 60mm - beginnend von der Stirnfläche des Elektrodenkopfes - am Elektrodenmantel entlang.
Bei einer Rundung und Schrägung ist vorzugsweise - ausgehend von der Stirnfläche des Elektrodenkopfes - zunächst die Rundung und anschließend die Schrägung vorgesehen. Von der Rundung ist ein sanfter Übergang zur Schrägung vorgesehen.

Die Schrägung wie auch die Rundung erlauben es, das Einfahren der Elektrode in die Gehäusebuchse bzw. in das Gehäuse sofort zum Erodieren optimal zu nutzen. Außerdem wird der Verschleiß der Elektrode vermindert.

Wenn die Elektrode sich in Richtung ihrer Z-Achse(Längsachse) gegen das Gehäuse oder dessen Buchse in Erodierstellung bewegt, entstehen größere Erodier-Flächen als ohne Schrägung und ohne Rundung. Mit der größeren Erodier-Fläche ergibt sich auch bei gleichbleibender Abtragleistung/Erodierleistung pro Flächeneinheit eine insgesamt größere Abtragleistung/Erodierleistung.

Die Elektrode kann im Durchmesser unter Berücksichtigung des oben beschriebenen Erodierspalts den Innenraum des innen verzahnten Extrudergehäuses bzw. der innen verzahnten Buchse des Extrudergehäuses ausfüllen, so daß die Innenverzahnung mit einer oder mehreren Längsbewegungen/Hubbewegungen der Elektrode durch das Gehäuse bzw. deren Buchse entsteht. Bei Herstellung der Innenverzahnung mit einer einzigen Hubbewegung ist die Elektrode mit einer langen Schrägung und/oder Rundung am Extruderkopf versehen, so daß die Verzahnung durch fortschreitende Vertiefung der Zahnlücken in einer Bewegung/Hub fertig gestellt wird.
Die Elektrode arbeitet dabei ähnlich wie ein Gewindeschneider.

Bei der Herstellung der Verzahnung in mehreren Schritten können mehrere Elektroden zur Anwendung kommen, zum Beispiel mit einer Elektrode für eine groben Bearbeitung und einer weiteren Elektrode zu einer anschließenden Feinbearbeitung.

Bei der Bearbeitung des Extrudergehäuses bzw. der Buchse kann die Verwendung scheibenförmiger Elektroden von Vorteil sein. Scheibenförmige Elektroden haben vorzugsweise eine Dicke von 30mm bis 120mm. Die Dicke von 30mm gehört zu einer kleinen Baugröße; die Dicke von 120mm zu einer großen Baugröße. Bei kleiner Baugröße ist haben scheibenförmige Elektroden geringer Dicke noch ausreichende Festigkeit. Bei größerer Baugröße wird dem durch eine größere Dicke Rechnung getragen.
Für die vorstehenden scheibenförmigen Elektroden ist es ausreichend, die Elektroden mit einer Stange an einem seitlich vom Extrudergehäuse bzw. seitlich von der Buchse verfahrbaren Schlitten zu halten. Durch Bewegung des Schlittens kann die Elektrode in das Extrudergehäuse bzw. die Buchse eintauchen. Durch gleichzeitige Drehung der Stange kann der Elektrode zugleich die Bewegung vermittelt werden, die notwendig ist, um eine Verzahnung mit einer gewünschten Neigung der Zähne zu erzeugen.

Mit einer einzigen Elektrode kann auch in anderer Weise gearbeitet werden, nämlich durch Lagerung der drehbaren Stange in einer exzentrischen, drehbaren Lagerschale. Die Stange hält die Elektrode. Durch Drehung der Lagerschale kann der Abstand der Stange zu der Innenwand des Extrudergehäuses bzw. zu der Innenwand der Buchse für das Extrudergehäuse geändert werden. Das kann genutzt werden, um die Elektrode immer weiter gegen die Innenwand des Gehäuses bzw. gegen die Innenwand der Buchse anzustellen und die Zahnlücken zu vertiefen, bis die Innenfläche des Extrudergehäuses die gewünschte Verzahnung zeigt.

Bei scheibenförmiger und gegen die Innenwand des Gehäuses bzw. die Innenwand der Buchse anstellbarer Elektrode,
welche durch die Gehäuseöffnung hindurch und aus dem Gehäuse wieder heraus gefahren werden kann bzw. durch die Öffnung der Buchse hindurch und wieder aus der Buchse heraus gefahren werden kann,
ist es von Vorteil, wenn die scheibenförmige Elektrode an beiden Enden mit einer Schrägung und/oder Rundung versehen ist. Dann kann die Elektrode in jeder Bewegungsrichtung einen Arbeitshub ausführen. Dabei entsteht zum Beispiel bei der Rückwärtsbewegung der Elektrude durch Erhöhung der Spannung ein weiterer Arbeitshub.

Vorzugsweise ist die gegen die Innenwand des Gehäuses bzw. gegen die Innenwand der Buchse anstellbare Elektrode mit einer Länge versehen, die gleich oder geringfügig größer als die Gehäuselänge bzw. die Länge der Buchse ist. Die Elektrode kann nach der Positionierung in dem Extrudergehäuse bzw. in der Buchse wie eine Planetspindel auf der Gehäuseinnenfläche bzw. auf der Innenfläche des Buchse abgewälzt werden. Die notwendige Antriebsverbindung der Elektrode kann bei digital steuerbaren Antrieben mit einer Datenverarbeitungsanlage erfolgen.

Die Verstellung der exzentrischen Lagerschale kann mit einem Schrittschaltmotor erfolgen.
Die Steuerung der Erodiervorrichtung erfolgt mindestens teilweise, vorzugsweise insgesamt elektronisch. Mit bekannten Steuerungselementen kann die notwendige Genauigkeit ohne weiteres eingehalten werden.

In Anwendung des Funkenerodierens von Extrudergehäusen/Buchsen auf die Innenverzahnung von Antriebszapfen ergibt sich:
Zunächst wird für die Innenverzahnung des Antriebszapfens ein Loch in den Antriebszapfen gebohrt. Das Loch kann ein Sachkloch oder ein Durchgangsloch sein.
Die Tiefe der Bohrung für ein Sackloch ist so groß gewählt, daß die für die anschließende Bearbeitung vorgesehenen Werkzeuge ausreichenden Auslauf haben. Bei Einbringen einer Durchgangsbohrung ist eine gestufte Bohrung von Vorteil, so daß eine später in das mit Innenverzahnung versehene Loch eingeschraubte Zentralspindel oder Schnecke an einer Verengung des Loches anschlagen kann.

Die sich an das Bohren anschließende Bearbeitung kann allein aus einem Funkenerodieren bestehen. Die anschließende Bearbeitung kann aber auch einen Zwischenschritt vor dem Einsatz der Funkenerodierung beinhalten. Als Zwischenschritt ist dann vorzugsweise eine grobe Einarbeitung der Innenverzahnung vorgesehen. Die abschließende Bearbeitung der Innenverzahnung ist dann dem Funkenerodieren vorbehalten. Der Zwischenschritt kann spanabhebend erfolgen, zum Beispiel durch Fräsen oder Hobeln oder dergleichen. Bei kleineren Baugrößen der Extruder ergeben sich im Vergleich zu größeren Extruder-Baugrößeren kleinere Zähne an den Schnecken/Zentralspindeln.

Um solche Zähne als Innenverzahnung in den Antriebszapfen einzuarbeiten ist nur eine vergleichsweise geringe Materialmenge abzutragen. Das kann ohne weiteres allein durch Funkenerosion erfolgen. Außerdem ist der Bewegungsraum in kleineren Bohrungen der Antriebszapfen gering, so daß eine spanabhebende Bearbeitung kompliziert ist und durch alleinige Funkenerosion entbehrlich wird.

Bei größeren Extruderbaugrößen erhöht sich die zur Herstellung der Innenverzahnung abzutragende Materialmenge um ein Vielfaches. Dann kann es wirtschaftlich sinnvoll sein, einen oben beschriebenen Zwischenschritt zwischen der Bohrung und der Funkenerosion anzuwenden.

Die Elektrode kann verschiedene Formen aufweisen.
Vorzugsweise beinhaltet die Elektrode für das Funkenerodieren der Innenverzahnung im Querschnitt eine Abbildung des in den Antriebszapfen einzuspannenden Schneckenendes/Zentralspindelendes. In der Seitenansicht besitzt die Elektrode dagegen eine Scheibenform, während die Schnecke/Zentralspindel eine langgestreckte Zylinderform besitzt. Die erfindungsgemäße Elektrode kann durch gleiche mechanische Bearbeitung wie die Schnecke/Zentralspindel hergestellt werden. Die übliche mechanische Bearbeitung erfolgt durch Bearbeitung auf einer Drehbank und durch Fräsen der Verzahnung. Es verursacht keine Schwierigkeit, wenn statt der langgestreckten Zylinderform nur eine Scheibe gleichen Querschnittes bearbeitet wird.
Je dünner die scheibenförmige Elektrode ist, desto geringer kann der Auslauf für die Elektrode in dem Sackloch sein.
Zu der oben beschriebenen Umwälzung des Dielektrikums können in der Elektrode Durchgangslöcher angeordnet werden, durch die das Dielektrikum strömen kann. Die Durchgangslöcher können anschließend wieder verschlossen werden. Vorzugsweise werden die Durchgangslöcher für die Durchführung eines Ankers und/oder für die Durchführung von Temperierungsmittel für die Temperierung der Zentralspindel genutzt. Übliche Temperierungsmittel sind Wasser und Öl. Mit dem Anker erfolgt eine Verspannung der Zentralspindel mit dem Antriebszapfen. Mit dem Temperierungsmittel wird je nach Bedarf Wärme in die Zentralspindel eingetragen oder Wärme aus der Zentralspindel herausgetragen.

Das Einschrauben der Schnecke/Zentralspindel in den mit einer entsprechenden Gewindebohrung versehenen Antriebszapfen fuhrt zu einer festen Verbindung bei Drehung in Arbeits-Drehrichtung des Extruders.
Aber auch eine Rückwärtsdrehung der Schnecke/Extruders führt nicht zu einem Lösen der Schnecke/Zentralspindel aus dem Antriebszapfen, wenn der Antriebszapfen und die Schnecke/Zentralspindel von einem Anker durchdrungen werden, mit dem die Schnecke/Zentralspindel und der Antriebszapfen gegeneinander verspannt worden sind.

Vorteilhafterweise entfallen mit der erfindungsgemäßen Verbindung des Antriebszapfens mit der Schnecke/Zentralspindel die Nuten einer Vielkeilwelle. Das vereinfacht die Herstellung der Verbindung. Überraschenderweise kann dadurch ein zum Beispiel um 30% größeres Drehmoment mittels der Verbindung übertragen werden.
Ein anderer wesentlicher Vorteil ergibt sich mit vereinfachter Herstellung und Vorratshaltung. Es können lange Stangen hergestellt werden, aus denen nach Bedarf durch Ablängen die gewünschten Zentralspindeln entstehen.

Die Erfindung ist nicht nur auf Extruder anwendbar, die über ihrer ganzen Länge, also in allen Abschnitten, die Bauart eines Planetwalzenextruders aufweisen. Die Erfindung ist auch auf andere Extruder anwendbar, die aus mehreren Abschnitten bestehen, wobei der Abschnitt, in dem das Einsatzmaterial dem Extruder zugeführt ist, als Füllteil bezeichnet ist und die Bauart einer Einschnecke aufweist. Die übliche Einschnecke besitzt Schneckengänge auf einem Kern. Dabei können die Schneckengänge mit dem Kern einstückig sein. Die Schneckengänge können auch mit Hülsen lösbar auf dem Kern sitzen. Der Kern kann ein verspannbarer Anker sein.

Bei einstückigen Einschnecken ist die Erfindung auch auf die Verbindung der Einschnecke mit dem Antriebszapfen anwendbar. Dann umfaßt der Antriebszapfen mit einer Innenverzahnung die Schnecke am äußeren Umfang.

Wahlweise ist das Füllteil anders gestaltet: die Zentralspindel setzt sich durch eine als Hülse ausgebildete Einschnecke hindurch fort. Die Zentralspindel ist vom einen Ende bis zum anderen Ende mit einer Verzahnung versehen. Das Antriebsritzel umfaßt das antriebsseitige Ende der Zentralspindel mit einer Innenverzahnung in der oben beschriebenen Weise. Die die Einschnecke bildende Hülse sitzt mit einem Innengewinde auf der Zentralspindel. Das Innengewinde kann in gleicher Weise wie das Innengewinde in dem Antriebszapfen hergestellt werden. Das schließt die Einarbeitung der Innenverzahnung durch Funkenerosion am Innenmantel der die Einschnecke bildenden Hülse ein.

Wahlweise werden die die Einschnecke bildenden Hülsen innen mit innen verzahnten Buchsen versehen. Die Buchsen werden mit der Innenverzahnung vorbereitet und vorzugsweise in die die Einschnecke bildenden Hülsen eingeschrumpft. Beim Einschrumpfen der Buchsen wird die die Einschnecke bildende Hülse erwärmt, bis die Buchsen sich einschieben lassen. Vorteilhafterweise ist die mit dem Schrumpfvorgang verbundene Wärmebelastung der nahezu vernachlässigbar, wenn eine induktive Erwärmung der die Einschnecke bildenden Hülse erfolgt. Vorteilhafterweise läßt sich nämlich mit der induktiven Erwärmung genau bestimmen, welche Materialbereiche der die Einschnecke bildenden Hülse erwärmt werden. Die mit der Erwärmung verbundene Durchmesservergrößerung kann sehr gering sein. Je nach Durchmesser kann die Vergrößerung im Bereich von Hundertstel bis Zehntel Millimeter liegen.
Die Innenverzahnung der Buchsen kann in gleicher Weise wie die oben beschriebene Innenverzahnung des Antriebszapfens erfolgen.

Wahlweise kann auch eine von der Einschnecke separate Zentralspindel vorgesehen, die in das zentralspindelseite Schneckenende eingeschraubt ist, während die Schnecke antriebsseitig in den Getriebezapfen eingeschraubt ist.

Die Montage der erfindungsgemäßen Zentralspindel ist von den weiteren Merkmalen des Extruders abhängig.
Üblicherweise bestehen alle Extruder aus verschiedenen Abschnitten.
Dabei können alle Abschnitte eine Planetwalzenextruderbauart aufweisen, so daß sich die Zentralspindel durch alle Abschnitte erstreckt. Dann kann die Zentralspindel zuerst montiert werden. Die mit dem Antriebszapfen verschraubte Zentralspindel wird durch einen Anker gesichert, der die Zentralspindel gegen den Antriebszapfen spannt.
Die verschiedenen Abschnitte können nacheinander montiert werden, beginnend mit dem antriebsseitigen Gehäuse. Die Gehäuse besitzen üblicherweise eine zylindrische Form und an den Enden Flansche. Mit dem Flansch kann das antriebsseitige Gehäuse an dem Extruderantrieb/Gehäuse befestigt werden. Anschließend werden die Planetspindeln in dem Gehäuse positioniert und an dem noch freien Ende des montierten weiteren Gehäuses der oben beschriebene Anlaufring eingesetzt werden. Danach wird das nächste Gehäuse montiert, indem dessen Flansch, der dem bereits montierten Gehäuse/Flansch zugewandt ist, mit dessen noch freiem Flansch verbunden wird. Zwischen diesen Flanschen wird der zuvor eingesetzte Anlaufring eingespannt. Daran schließt sich das Einsetzen der Planetspindeln und das Einsetzen des zugehörigen Anlaufringes. Der nächste Extruderabschnitt wird wie der zuvor erläuterte Abschnitt montiert.

Bei einer Drehbewegung der Zentralspindel in Arbeitsrichtung ist ein Lösen der Verschraubung aus dem Antriebszapfen nicht zu befürchten, auch deshalb, weil die Reaktionskräfte der Planetspindeln die Zentralspindel gegen den Antriebszapfen drücken.
Bei einem Rückwärtsdrehen wird ein Lösen der Zentralspindel aus dem Antriebszapfen durch den Anker verhindert, der die Zentralspindel mit dem Antriebszapfen verspannt.

Die Zentralspindel kann sich auch durch alle Abschnitte erstrecken, wenn der Extruder im Bereich der Materialeinfüllung einen Abschnitt mit einer Einschneckenbauart besitzt. Dabei kann eine oben beschrieben hülsenförmige und mit Innengewinde versehene Schnecke auf die zuvor in den Antriebszapfen geschraubte Zentralspindel geschraubt werden, bis sie an dem Antriebszapfen anliegt. Anschließend wird das antriebsseitige Gehäuse montiert und werden die Planetspindeln eingesetzt.

Wenn vor dem Materialeintritt in den anschließenden Planetwalzenextruderabschnitt ein Druckaufbau gewünscht ist, wird vorzugsweise ein Stauring in das offene Gehäuseende eingesetzt. Bei der Montage des nächsten Abschnittes wird der Stauring zwischen den miteinander verspannten Gehäuseflanschen eingespannt.
Im Falle einer Zentralspindeldrehung in Arbeitsrichtung wird die Zentralspindel wie in dem zuvor erläuterten Anwendungsfall durch die Verschraubung, durch die Reaktionskräfte und durch auch hier vorgesehenen Anker in dem Antriebszapfen gehalten.

Der Anker sichert auch im Rückwärtslauf die Zentralspindel.
Zugleich wird die die Einschnecke bildende Hülse durch den Stauring in der Position auf der Zentralspindel gehalten.
Wenn kein Stauring gewünscht ist, kann die die Einschnecke bildende Hülse durch den andere Mittel in der Position auf der Zentralspindel gehalten werden.

Vorzugsweise hat die Hülse dann einen so großen Durchmesser, daß die Hülse bei einem Rückwärtslauf der Zentralspindel die Planetspindeln an der Stirnfläche berühren kann, noch weiter bevorzugt in dem Bereich, der kleiner als der Fußkreis ist. Als Fußkreis wird der Durchmesser im Tiefsten der Verzahnung zwischen zwei Zähnen bezeichnet.

Wenn vor dem Materialaustritt aus dem Extruder gleichfalls noch ein Druckaufbau mittels einer Einschnecke gewünscht ist, kann die Zentralspindel sich gleichwohl durch den zugehörigen Abschnitt des Extruders erstrecken und in gleicher Weise mit einer die Einschnecke bildenden, innen verzahnten Hülse versehen sein, die mit der Zentralspindel verschraubt ist.

In der Zeichnung ist ein Ausfuhrungsbeispiel der Erfindung dargestellt.

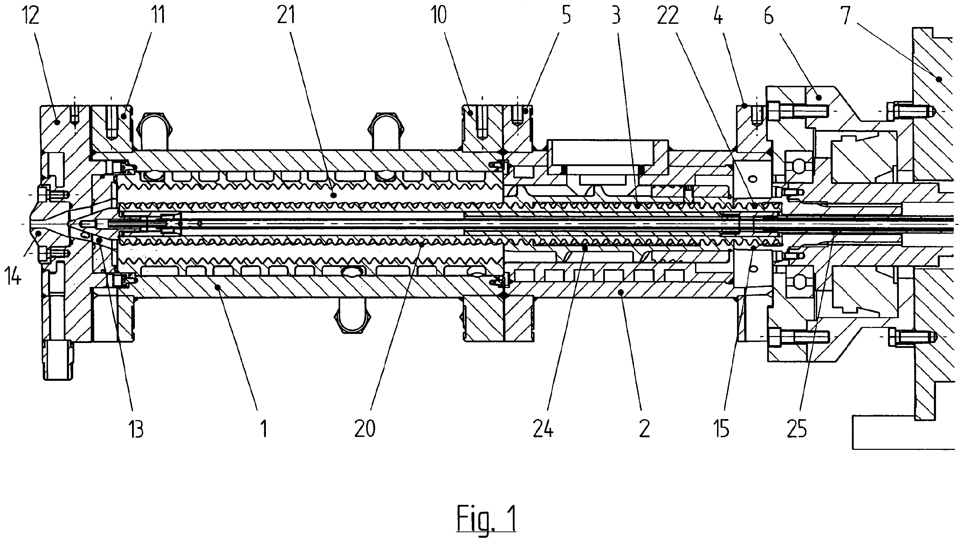

Fig. 1 zeigt einen Extruder, der aus zwei Extruderabschnitten 1 und 2 zusammen gesetzt ist. Der Abschnitt 2 ist das Füllteil. Durch die Einfüllöffnung des Füllteiles werden dem Extruder die Einsatzmaterialien in Granulatform zugeführt.
Das Füllteil besitzt ein zylindrisches Gehäuse, das an den Enden mit Flansch 4 und 5 versehen ist. Der Flansch 5 ist mit dem Gehäuse 6 eines Antriebes 7 verbunden ist. Die Verbindung wird durch Schrauben gebildet.

Der Abschnitt 1 ist ein Planetzwalzenextruderabschnitt, bestehend aus einem zylindrischen Gehäuse mit Flanschen 10 und 11 an jedem Ende. Dabei ist der Flansch 10 mit dem Flansch 5 durch Schrauben verbunden. Der andere Flansch 11 ist mit einer Düsenplatte 12 verbunden, in der eine auswechselbare Düse 14 sitzt.
Zu dem Planetwalzenextruderabschnitt gehören noch eine mittig im Gehäuse angeordnete Zentralspindel 20 und verschiedene Planetspindeln 21, die gleichmäßig verteilt um die Zentralspindel 20 herum in dem Zwischenraum zwischen Zentralspindel 20 und umgebendem Gehäuse angeordnet sind. Dabei ist die Zentralspindel 20 außen verzahnt, das Gehäuse innen verzahnt und die Planetspindeln 21 außen verzahnt. Die verschiedenen Verzahnung passen zueinander, so daß die Planetspindeln 21 gleichzeitig mit der Zentralspindel 20 und der Verzahnung des Gehäuses kämmen können.
Die Zentralspindel 20 ist von einem Ende bis zum anderen Ende gleichmäßig verzahnt.
Die Zentralspindel 20 erstreckt sich von dem Antrieb 7 bis zur Düsenplatte 12, also auch durch den Abschnitt 2. Zur Übertragung des notwendigen Drehmomentes von dem Antrieb 7 auf die Zentralspindel 20 greift die Zentralspindel 20 in einen Antriebszapfen/Getriebezapfen 15. Die Eingriffstelle ist mit 22 bezeichnet. An der Eingriffstelle ist eine Verschraubung zwischen dem Antriebszapfen/Getriebezapfen 15 und der Zentralspindel 20 vorgesehen. Außerdem ist ein Anker 25 in der Zentralspindel vorgesehen, der mit dem Antriebszapfen/Getriebezapfen 15 verspannt wird.

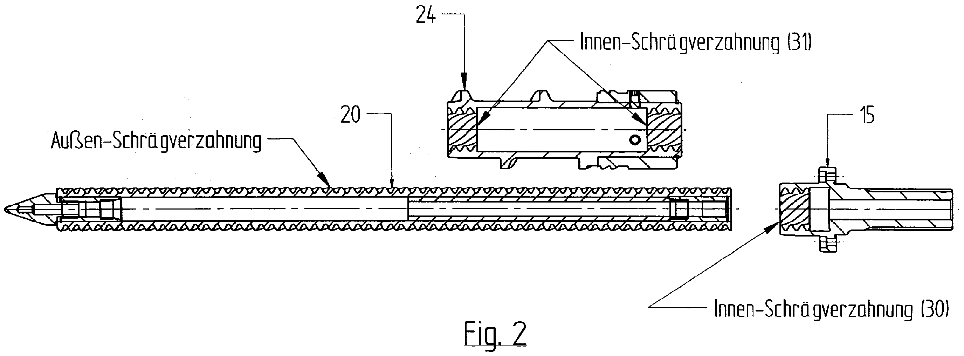

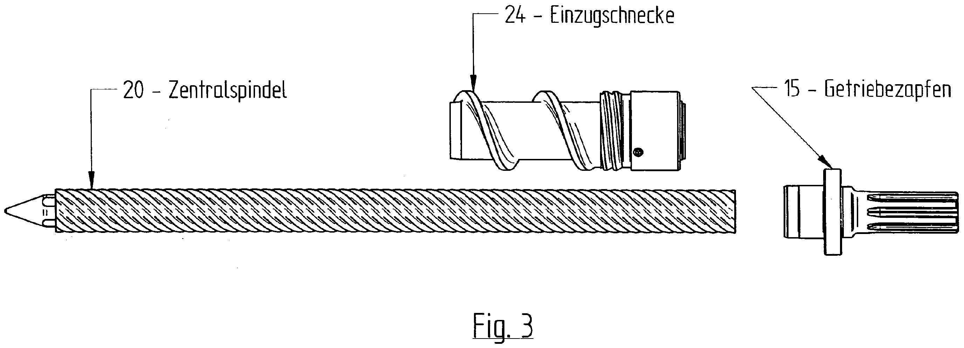

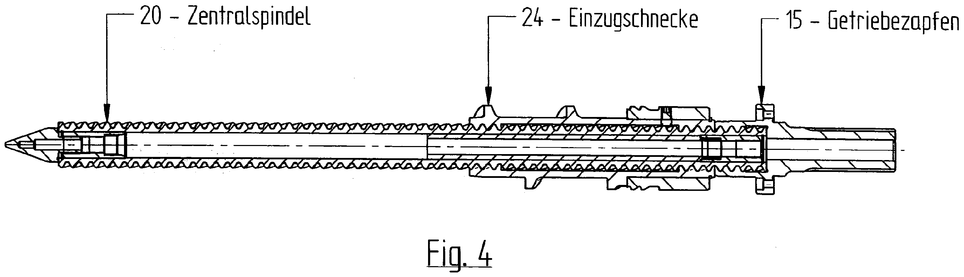

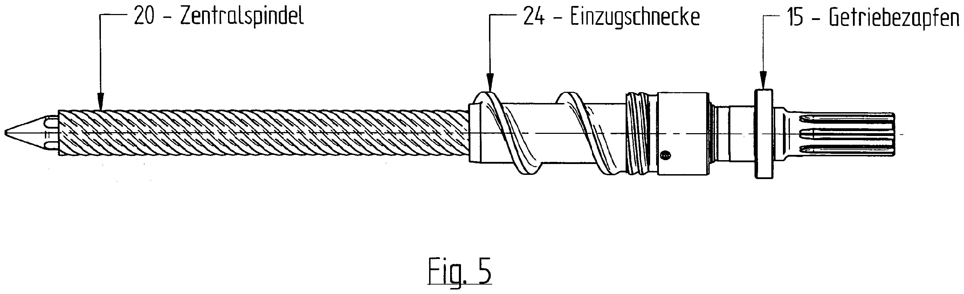

Auf der Zentralspindel 20 sitzt in dem Abschnitt 2 eine Hülse 24, die zugleich eine Füllschnecke/Einzugschnecke bildet.
Die Zentralspindel 20, die Hülse 24 und der Antriebszapfen sind in den Fig. 2 bis 5 in verschiedenen Ansichten dargestellt. Fig. 3 zeigt Einzelansichten, die Fig. 2 und 4 zeigen Schnittdarstellungen. Dabei wird erkennbar, daß die Zentralspindel eine Außenverzahnung besitzt. Der
Antriebszapfen/Getriebezapfen 15 besitzt zentralspindelseitig eine innverzahnte Bohrung 30. Die Innenverzahnung ist der Außenverzahnung der Zentralspindel 20 angepaßt. Die Anpassung ist durch Wahl eines entsprechenden Innendurchmessers für die Bohrung und durch Ausarbeitung der notwendigen Zahnlücken in den Innenmantel des Zapfens 15.
Die Einarbeitung erfolgt durch Funkenerosion. Für die Funkenerosion wird eine Elektrode in die Bohrung des Zapfens 15 bewegt. Die Elektrode ist scheibenförmigen ausgebildet und besitzt - abgesehen von dem für die Funktenerosion notwendigen Abstand - den gleichen Querschnitt wie die Zentralspindel. Dabei ist die Elektrode von einem Dielektrikum umgeben und liegen an der Elektrode und an dem Zapfen unterschiedliche Spannungen an. Der Spannungsunterschied ist so groß, daß eine Funkenerosion an dem Innenmantel entsteht.
Die Innenverzahnung der Zapfen 15 erlaubt eine Verschraubung der Zentralspindel 20 in dem Zapfen 15.

Die die Einzugschnecke/Füllschnecke bildende Hülse 24 besitzt an jedem Ende eine Innenverzahnung 31. Die Innenverzahnung ist in gleicher Weise durch Funkenerosion hergestellt worden wie bei der Herstellung der Innenverzahnung in dem Zapfen 15.
Mit der Innenverzahnung kann die Hülse 24 auf die Zentralspindel 20 geschraubt werden und mit der Zentralspindel 20 montiert werden, so daß zwischen den Planetspindeln 21 des Abschnittes 1 und dem Zapfen 15 sitzt.

Im Betriebsfall wird Kunststoff mit notwendigen Additiven, Zuschlägen und Füllstoffen in dem das Füllteil bildenden Abschnitt 2 aufgegeben, komprimiert und erwärmt. Die mechanische Belastung des Kunststoffes und die zugeführte Wärme bewirken im Ausführungsbeispiel bereits ein Aufschmelzen des Kunststoffes. Von der Füllschnecke/Einzugsschnecke wird das Einsatzmaterial in den Abschnitt 1 gedrückt und zwischen der Zentralspindel, den Planetspindeln und dem Gehäuse vermischt und homogenisiert. Zugleich wird die Schmelze temperiert, so daß die Schmelze sich am Ende des Abschnittes 1 in einem Raum 13 sammelt, bevor sie mit definierter Temperatur durch die Düse 14 aus dem Extruder austritt.

## Patentansprüche

1. Extruder, der mindestens teilweise als Planetwalzenextruder (1) ausgebildet ist, wobei der als Planetwalzenextruder (1) ausgebildete Teil eine angetriebene, außen verzahnte Zentralspindel (20) besitzt,
wobei die Zentralspindel (20) im Abstand von einem innen verzahnten Gehäuse umgeben ist und in dem Hohlraum zwischen Zentralspindel (20) und Gehäuse außen verzahnte Planetspindeln (21) umlaufen, deren Verzahnung sowohl mit der Innenverzahnung des Gehäuses als auch mit der Außenverzahnung der Zentralspindel(20) kämmt,
wobei die Zentralspindel (20) mit einem Zapfen (15) des Antriebes (7) gekoppelt ist,
**dadurch gekennzeichnet,**
**daß** der Zapfen(15) des Antriebes (7) mit einer innen verzahnten Bohrung versehen ist, deren Verzahnung zu der Außenverzahnung der Zentralspindel (20) paßt und die Zentralspindel (20) in dem Zapfen (15) verschraubt ist.

2. Extruder nach Anspruch 1, **dadurch gekennzeichnet, daß** die Zentralspindel (20) sich auch durch Extruderabschnitte mit anderer Bauweise, vorzugsweise durch Abschnitte erstreckt, die als Einschnecke (24) ausgebildet sind, wobei als Schnecke (24) eine Hülse vorgesehen ist, die außen mit den Schneckengängen versehen ist,
wobei die Hülse (24) darüber hinaus eine Innenverzahnung (31) aufweist, deren Verzahnung zu der Außenverzahnung der Zentralspindel (20) paßt und die die Schnecke bildende Hülse (24) mit der Zentralspindel (20) verschraubt ist.

3. Extruder nach Anspruch 2, **dadurch gekennzeichnet, daß** die die Schnecke bildende Hülse (24) mit mindestens einer innen verzahnten Buchse, vorzugsweise zwei voneinander beabstandete Buchsen versehen ist.

4. Extruder nach Anspruch 3, **dadurch gekennzeichnet, daß** die die Schnecke bildende Hülse (24) auf die innen verzahnte Buchse geschrumpft ist.

5. Extruder nach einem der Ansprüche 1 bis 4, **dadurch gekennzeichnet, daß** die Zentralspindel (20) durch einen Anker (25) mit dem Zapfen(15) des Antriebes (7) verspannt ist, wobei der Anker (25) mittig in der hohl ausgebildeten Zentralspindel (20) sitzt.

6. Extruder, der mindestens teilweise als Planetwalzenextruder (1) ausgebildet ist,
wobei der als Planetwalzenextruder (1) ausgebildete Teil eine angetriebene, außen verzahnte Zentralspindel (20) besitzt,
wobei die Zentralspindel (20) im Abstand von einem innen verzahnten Gehäuse umgeben ist und in dem Hohlraum zwischen Zentralspindel (20) und Gehäuse außen verzahnte Planetspindeln (21) umlaufen, deren Verzahnung sowohl mit der Innenverzahnung des Gehäuses als auch mit der Außenverzahnung der Zentralspindel (20) kämmt,
wobei zu dem Extruder ein als Einschnecke ausgebildetes Füllteil gehört,
wobei die Zentralspindel (20) mit ihrem getriebeseitigen Ende in der Schnecke des Füllteiles verschraubt ist,
**dadurch gekennzeichnet, daß** die Schnecke des Füllteiles an ihrem getriebeseitigen Ende mit einem Zapfen (15) des Antriebes (7) verschraubt ist und die Schnecke zentralspindelseitig mit einer innen verzahnten Bohrung versehen ist, deren Verzahnung zu der Außenverzahnung der Zentralspindel (20) paßt.

7. Extruder nach Anspruch 5, **dadurch gekennzeichnet, daß** die Schnecke des Füllteiles ihrerseits getriebeseitig einen mit Außengewinde versehenen Zapfen (15) aufweist, der in einer Gewindebohrung des Getriebezapfens (15) verschraubt ist
oder daß die Schnecke ihrerseits getriebeseitig mit einer Gewindebohrung versehen ist, in der der Gebriebezapfen (15) mit einem Außengewinde verschraubt ist

8. Extruder nach einem der Ansprüche 1 bis 7, **gekennzeichnet durch** die Verwendung von Zentralspindeln (20) mit einheitlicher Verzahnung.

9. Extruder nach einem der Ansprüche 1 bis 8, **gekennzeichnet durch** funkenerodierte Innenverzahnungen.

10. Verfahren zur Herstellung eines Extruders nach einem der Ansprüche 1 bis 7, **gekennzeichnet durch** Verwendung längeren Ausgangsmaterials mit Außenverzahnung, von dem die Zentralspindeln (20) abgelängt werden.

## Claims

1. Extruder that is at least partly designed as a planetary roller extruder (1), wherein the part designed as the planetary roller extruder (1) possesses a driven, externally toothed central spindle (20),
wherein the central spindle (20) is surrounded by, and spaced apart from an inner toothed housing, and externally toothed planetary spindles (21) revolve in the cavity between central spindle (20) and housing, wherein the toothing of the planetary spindles meshes with both the inner toothing of the housing as well as with the external toothing of the central spindle (20),
wherein the central spindle (20) is coupled with a journal (15) of the drive (7),
**characterised in that**,
the journal (15) of the drive (7) is equipped with an internally toothed bore, whose toothing matches the external toothing of the central spindle (20) and the central spindle (20) is screwed in the journal (15).

2. Extruder according to claim 1, **characterised in that** the central spindle also extends through extruder sections of different designs, and preferably extends through sections that are designed as a single screw (24), wherein a sleeve is provided as the screw (24), said sleeve being externally provided with the screw flights,
wherein the sleeve (24) moreover possesses an inner toothing (31), whose toothing matches the external toothing of the central spindle (20), and the sleeve (24) that forms the screw is screwed to the central spindle (20).

3. Extruder according to claim 2, **characterised in that** the sleeve (24) that forms the screw is provided with at least one inner toothed liner, preferably two liners that are spaced apart from one another.

4. Extruder according to claim 3, **characterised in that** the sleeve (24) that forms the screw is shrunk onto the inner toothed liner.

5. Extruder according to one of claims 1 to 4, **characterised in that** the central spindle (20) is clamped to the journal (15) of the drive (7) by a tie bar (25), wherein said tie bar (25) is seated centrally in the hollow central spindle (20).

6. Extruder that is at least partly designed as a planetary roller extruder (1), wherein the part designed as the planetary roller extruder (1) possesses a driven, externally toothed central spindle (20),
wherein the central spindle (20) is surrounded by, and spaced apart from an inner toothed housing, and externally toothed planetary spindles (21) revolve in the cavity between central spindle (20) and housing, wherein the toothing of the planetary spindles meshes with both the inner toothing of the housing as well as with the external toothing of the central spindle (20),
wherein a feed section designed as a single screw belongs to the extruder,
wherein the gear side end of the central spindle (20) is screwed in the screw of the feed section,
**characterised in that** the gear side end of the screw of the feed section is screwed to a journal (15) of the drive (7) and the screw on its central spindle side is provided with an inner toothed bore, whose toothing matches the external toothing of the central spindle (20).

7. Extruder according to claim 5, **characterised in that** the screw of the feed section for its part at the gear side possesses a journal (15) provided with an external thread, the journal (15) being screwed in a threaded bore of the gear journal(15) or that the screw for its part at the gear side is equipped with a threaded bore, in which the gear journal (15) with an external thread is screwed.

8. Extruder according to one of claims 1 to 7, **characterised by** the use of central spindles (20) with uniform toothing.

9. Extruder according to one of claims 1 to 8, **characterised by** spark eroded inner toothings.

10. Method to produce an extruder according to one of claims 1 to 7, **characterised by** the use of longer starting material having external toothing, from which the central spindles (20) are cut to length.

## Revendications

1. Extrudeuse formée au-moins partiellement d'une extrudeuse à tambour planétaire(1), où la partie qui a la forme d'une extrudeuse à tambour planétaire (1) possède une broche centrale(20) entraînée, pourvue de dents à l'extérieur,
Où la broche centrale (20) est ceinte à distance d'un logement pourvu de dents à l'intérieur et dans la cavité entre la broche centrale (20) et le logement, des broches satellitaires (21) pourvues de dents à l'extérieur font le tour, dont la denture s'engrène avec la denture intérieure du logement comme avec la denture extérieure de la broche centrale,
Où la broche centrale (20) est couplée avec untourillon(15) de l'arbre moteur (7),
**Caractérisée en ce que**
Le tourillon (15) de l'arbre moteur (7) est pourvu d'un perçage denté, dont la denture convient à la denture extérieure de la broche centrale (20) et la broche centrale (20) est vissée dans le tourillon (15).

2. Extrudeuse selon la revendication 1, **caractérisée en ce que**, que la broche centrale (20)s'étend aussi à travers des parties d'extrudeuse de conception différente, de préférence des partiesà hélice unique (24), où est prévue comme hélice (24) une douille, pourvue à l'extérieur de pas d'hélices,
Où la douille (24) présente en outre une denture intérieure (31), dont la denture convient à la denture extérieure de la broche centrale (20) et la douille formant hélice (24) est vissée sur la broche centrale (20).

3. Extrudeuse selon la revendication 2, **caractérisée en ce que** la douille formant hélice (24) est pourvue d'au moins un fourreau avec une denture intérieure, de préférence de deux fourreaux distants l'un de l'autre.

4. Extrudeuse selon la revendication 3, **caractérisée en ce que** la douille formant hélice (24) est rétrécie sur le fourreau intérieur.

5. Extrudeuse selon l'une des revendications 1 à 4, **caractérisée en ce que**, la broche centrale (20) est fixée grâce à une ancre (25) au tourillon (15) de la transmission (7), où le tourillon (25) se trouve au milieu de la broche centrale (20) formée dans le creux.

6. Extrudeuse, formée au moins en partie d'une extrudeuse à tambour planétaire (1), où la partie formée d'une extrudeuse à tambour planétaire (1) possède une broche centrale (20) entraînée, pourvue de dents à l'extérieur,
Où la broche centrale (20) est ceinte à distance d'un logement pourvu de dents à l'intérieur et dans la cavité entre la broche centrale (20) et le logement, des broches satellitaires (21) pourvues de dents à l'extérieur font le tour, dont la denture s'engrène avec la denture intérieure du logement comme avec la denture extérieure de l'axe central,
Où l'extrudeuse comporte une partie pleine formée comme l'hélice unique,
Où la broche centrale (20) est vissée par son extrémité du côté entraîné à l'hélice de la partie pleine,
**Caractérisée en ce que** l'hélice de la partie pleine est vissée par son extrémité entraînée à un tourillon (15) de l'arbre moteur (7), et l'hélice est pourvue, du côté de la broche centrale, d'un perçage denté, dont la denture convient à la denture extérieure de la broche centrale (20).

7. Extrudeuse selon la revendication 5, **caractérisée en ce que** l'hélice de la partie pleine présente quant à elle, du côté de la partie entraînée, un tourillon (15) pourvu de filetages extérieurs, qui est vissé dans le taraudagedu tourillon moteur (15)
Ou **en ce que** l'hélice est pourvue quant à elle du côté où elle est entraînée d'un taraudage, dans lequel le tourillon moteur (15) est vissé sur un filetage extérieur.

8. Extrudeuse selon l'une des revendications 1 à 7, caractériséepar l'application de la broche centrale (20) avec une denture uniforme.

9. Extrudeuse selon l'une des revendications 1 à 8, **caractérisée par** une denture intérieure érodée par l'usage.

10. Procédé pour la fabrication d'une extrudeuse selon l'une des revendications 1 à 7, **caractérisé par** l'application d'une matière première de plus grande longévité à la denture extérieure, d'où une plus grande longévité de l'axe central (20).
